# EUROPÄISCHE PATENTSCHRIFT

(11) **EP 3 527 816 B1**
(45) Veröffentlichungstag und Bekanntmachung des Hinweises auf die Patenterteilung: **10.01.2024**
(21) Anmeldenummer: 19157529.9
(22) Anmeldetag: 15.02.2019
(51) Int. Cl.: F03D 7/02, F03D 17/00

(54) **VERFAHREN UND SYSTEM ZUM ERMITTELN EINER AUSRICHTUNGSKORREKTURFUNKTION**
METHOD AND SYSTEM FOR DETERMINING AN ALIGNMENT CORRECTION FUNCTION
PROCÉDÉ ET SYSTÈME DE DÉTERMINATION D'UNE FONCTION DE CORRECTION D'ALIGNEMENT

(30) Priorität: 19.02.2018 DE 102018001269
(43) Veröffentlichungstag der Anmeldung: 21.08.2019
(73) Patentinhaber: Siemens Gamesa Renewable Energy Service GmbH, 20097 Hamburg (DE)
(72) Erfinder: MITTELMEIER, Niko, 88048 Friedrichshaven (DE)
(74) Vertreter: Schlotter, Alexander Carolus Paul

(56) Entgegenhaltungen:
- EP-A1- 2 154 362
- EP-A2- 2 080 901
- CN-A- 107 577 647
- US-A1- 2016 298 607
- ROLF-ERIK KECK ED - LI BAIZHAN ET AL: "A numerical investigation of nacelle anemometry for a HAWT using actuator disc and line models in CFX", RENEWABLE ENERGY, PERGAMON PRESS, OXFORD, GB, Bd. 48, 2. April 2012 (2012-04-02), Seiten 72-84, XP028428094, ISSN: 0960-1481, DOI: 10.1016/J.RENENE.2012.04.004 [gefunden am 2012-04-11]

## Beschreibung

Die vorliegende Erfindung betrifft ein Verfahren zum Ermitteln einer Korrekturfunktion für eine Windenergieanlage, ein Verfahren und ein System zum Ermitteln einer Ausrichtungskorrekturfunktion für eine Gondel einer Windenergieanlage, ein Verfahren zum Betreiben einer Windenergieanlage, ein Computerprogramm und ein Computer-lesbares Medium.

Üblicherweise werden Gondeln von Windenergieanlagen auf Grundlage einer gemessenen Windrichtung derart ausgerichtet, dass die von der Windenergieanlage erzeugte Leistung möglichst maximal wird. Dabei ist die theoretisch maximale Leistungsaufnahme bei einer senkrechten Anströmung der Rotorebene durch den Wind gegeben. Aufgrund der Größe der Rotorblätter trifft der anströmende Wind jedoch nicht überall senkrecht auf die Rotorblätter. Mittels einer Ausrichtung des Rotors senkrecht zum anströmenden Wind in Nabenhöhe, so dass eine durch eine Rotornabe verlaufende Rotorachse des Rotors parallel zur Windrichtung steht, kann im Allgemeinen nicht die maximale Leistung erzielt werden, da der Wind mit zunehmender Entfernung zum Boden in der Regel zunimmt und somit die maximale Leistung nicht auf Höhe der Rotornabe aufgenommen wird, und/oder die Rotorblätter in unterschiedlichen Abschnitten des Rotors aus unterschiedlichen Richtungen anströmen werden.

Zudem muss bei einer Regelung der Ausrichtung der Gondel auf Grundlage der gemessenen Windrichtung berücksichtigt werden, dass die Windrichtung durch von den Rotorblättern verursachten Drall sowie Turbulenzen auf einer Leeseite des Rotors beeinflusst wird, denn in der Regel wird die Windrichtung auf einer Leeseite des Rotors, beispielsweise mittels eines auf dem Dach der Gondel angeordneten Anemotropometers, gemessen.

Aus dem Stand der Technik ist es daher bekannt, einen konstanten Ausgleichswert auf die gemessene Windrichtung zu addieren, um die gewünschte Ausrichtung der Gondel relativ zur auf der Luvseite des Rotors herrschenden Windrichtung zu erreichen.

Beispielsweise betrifft die Druckschrift DE 199 34 415 B4 ein Verfahren zur Windnachführung bei Windenergieanlagen, wobei die Einstellung eines Winkels zwischen der Richtung einer Rotorachse und einer Windrichtung aufgrund der Erfassung und gemeinsamen Auswertung von Windrichtung, Windgeschwindigkeit und erzeugter Leistung erfolgt. Dabei wird für eine beliebige Anzahl von Leistungskurven für unterschiedliche Winkel zwischen Windrichtung und Rotorachse ein Scheitelpunkt der Leistungskurven für unterschiedliche Anströmwinkel bei der aktuell herrschenden Windgeschwindigkeit ermittelt und die aktuelle Abweichung zum optimalen Anstellwinkel korrigiert.

Die US 2016/298607 betrifft ein Verfahren zum Bewerten der Auswirkung von Aufrüstungen von Windenergieanlagen, das ein Bestimmen einer Basisleistungskurve für eine Windenergieanlage vor dem Aufrüsten der Windenergieanlage und ein Bestimmen einer Basiswindgeschwindigkeitsübertragungsfunktion für die Windenergieanlage vor dem Aufrüsten der Windkraftanlage umfasst.

Die EP 2 154 362 A1 betrifft eine Windenergieanlage, wobei sequentiell Datensätze einer erzeugten Ausgangsleistung während des Betriebs, einer Luv-Windgeschwindigkeit, die auf der Grundlage einer an einem Anemometer gemessenen Windgeschwindigkeit geschätzt wird, und einer Windrichtungsabweichung akkumuliert werden, welche die Differenz zwischen einer am Anemometer gemessenen Windrichtung und der Orientierung der Gondel ist, die gesammelten Daten statistisch auswertet werden, eine Verteilungskurve, die der Windrichtungsabweichung der erzeugten Ausgangsleistung bei jeder ankommenden Windgeschwindigkeit entspricht, bestimmt wird, die Windrichtungsabweichung, die der Spitze der Verteilungskurve entspricht, als Korrekturwert des Anemometers verwendet wird, der Korrekturwert des Anemometers für jede ankommende Windgeschwindigkeit in einer Windrichtungskorrekturtabelle gespeichert wird, die am Anemometer gemessene Windrichtung mit dem Korrekturwert korrigiert wird, und eine Leistungserzeugungsregelung unter Verwendung der korrigierten Windrichtung als einem Steuerparameter ausgeführt wird.

R.-K. Keck, "A numerical investigation of nacelle anemometry for a HAWT using actuator disc and line models in CFX", Renewably Energy 48(2012), 72-84 betrifft eine numerische Untersuchung von Gondelanemometry für eine Windenergieanlage unter Verwendung von verschiedenen Modellen in CFX.

Es ist eine Aufgabe der Erfindung, die Messung von zur Ausrichtung einer Gondel einer Windenergieanlage benötigten Größen, insbesondere einer Windgeschwindigkeit, zu verbessern, insbesondere präziser zu machen. Es ist insbesondere eine Aufgabe der Erfindung, eine verbesserte Ausrichtung der Gondel der Windenergieanlage zu ermöglichen.

Diese Aufgabe wird gelöst durch ein Verfahren zum Ermitteln einer Korrekturfunktion für eine Windenergieanlage, ein System zum Ermitteln einer Ausrichtungskorrekturfunktion für eine Gondel einer Windenergieanlage, ein Computerprogramm und ein Computer-lesbares Medium nach einem der unabhängigen Ansprüche. Bevorzugte Ausführungen sind Gegenstand der Unteransprüche.

Ein erster Aspekt der Erfindung betrifft ein Verfahren zum Ermitteln einer Korrekturfunktion, insbesondere eine Transferfunktion, für eine Windenergieanlage, mittels der eine Luvwindgeschwindigkeit auf der Grundlage einer von einem leeseitigen Anemometer der Windenergieanlage gemessenen Leewindgeschwindigkeit ermittelbar ist, wobei Luv und Lee sich auf einen Rotor der Windenergieanlage beziehen. Das Verfahren weist folgende Arbeitsschritte auf: (i) Messen einer Luvwindgeschwindigkeit, einer Leewindgeschwindigkeit und einer Leewindrichtung, wobei jeweils eine Vielzahl an Messwerten in einem bestimmten Zeitraum aufgenommen wird; (ii) Ermitteln der Korrekturfunktion, insbesondere der Transferfunktion, auf Grundlage der aufgenommenen Messwerte mittels eines Modells, wobei die aufgenommenen Messwerte in dem Modell in Beziehung zueinander gesetzt werden und die Korrekturfunktion, insbesondere die Transferfunktion, einer Leewindgeschwindigkeit in Abhängigkeit einer Leewindrichtung eine Luvwindgeschwindigkeit zuordnet; und (iii) Ausgeben der ermittelten Korrekturfunktion. Luv bzw. luvseitig im Sinne der Erfindung bezeichnet einen Bereich auf einer dem Wind zugewandten Seite des Rotors der Windenergieanlage. Lee bzw. leeseitig im Sinne der Erfindung bezeichnet einen Bereich auf einer dem Wind abgewandten Seite des Rotors der Windenergieanlage.

Eine Leewindrichtung im Sinne der Erfindung ist insbesondere die mittels eines leeseitigen Anemotropometers der Windenergieanlage ermittelte Windrichtung, aus der das Anemotropometer von dem Wind, der den Rotor passiert hat, angeströmt wird. Dabei wird die Leewindrichtung vorzugsweise bezüglich einer Rotorachse des Rotors der Windenergieanlage gemessen und als Winkel bezüglich der Rotorachse angegeben.

Auf Grundlage der Leewindrichtung kann, vorzugsweise unter Berücksichtigung eines Ausgleichswerts, die Gondel der Windenergieanlage ausgerichtet werden, beispielsweise indem die Gondel derart gedreht wird, dass die Leewindrichtung und die Rotorachse zumindest im Wesentlichen parallel zueinander liegen. Ein Ausgleichswert im Sinne der Erfindung ist insbesondere ein Korrekturwert, der auf die Leewindrichtung aufaddiert wird, um bei einer Ausrichtung der Gondel eine Beeinflussung der Windrichtung durch den Rotor zu berücksichtigen. Der Ausgleichswert kann insbesondere von der Luvwindgeschwindigkeit abhängen.

Luvwindgeschwindigkeit im Sinne der Erfindung meint insbesondere ein Maß für die repräsentative ungestörte Anströmgeschwindigkeit des Rotors. Vorzugsweise ist die Luvwindgeschwindigkeit ein Maß für die in der Anströmung des Rotors enthaltene Energie. Es kann sich hierbei um eine repräsentative Punktmessung, z.B. an einem Messmast, handeln. Es bedeutet jedoch nicht notwendiger Weise, dass es sich um eine physikalisch an einem Punkt des Raumes vor dem Rotor messbare Windgeschwindigkeit handelt, weil die repräsentative Luvwindgeschwindigkeit bei den heute üblichen Rotordurchmessern von weit über 100 Metern im Allgemeinen räumlich und/oder zeitlich gemittelt wird, um den Einfluss der stochastischen Turbulenz zu reduzieren. Dies kann vorzugsweise durch räumliche Messverfahren, wie übliche Lidar-Anordnungen, erfolgen.

Vorzugsweise erfolgt die Messung der Luvwindgeschwindigkeit an einem Ort in der Umgebung, der repräsentativ für die Luvwindgeschwindigkeit der Windenergieanlage ist, sich jedoch nicht in Luv der Windenergieanlage befindet. Derartige Orte können in einem komplexen Windpark beispielsweise empirisch oder durch aufwendige CFD-Simulationen ermittelt werden.

Weiter vorzugsweise erfolgt die Messung der Luvwindgeschwindigkeit in Luv des Windrotors, da somit eine besonders hohe Zuverlässigkeit der Messung erzielt wird.

Ein Ermitteln einer Korrekturfunktion im Sinne der Erfindung ist insbesondere ein Bestimmen von Koeffizienten, vorzugsweise Regressionskoeffizienten, eines der Korrekturfunktion zu Grunde gelegten Modells. Eine Korrekturfunktion kann beispielsweise mittels eines Fits von Messwerten gemäß dem Modell ermittelt werden.

Ein Setzen von Messwerten in Beziehung zueinander im Sinne der Erfindung betrifft insbesondere das Aufstellen und/oder Lösen eines Gleichungssystems, in welches die Messwerte eingehen. Vorzugsweise enthält das Gleichungssystem dabei Regressionskoeffizienten des Modells, die auf Grundlage der in das Gleichungssystem eingehenden Messwerte bestimmt werden. Alternativ oder zusätzlich kann ein Setzen von Messwerten in Beziehung zueinander, wie zuvor bereits beschrieben, auch ein Fitten der Messwerte, insbesondere gemäß des Modells bzw. einer das Modell beschreibenden Modellfunktion, sein, wobei vorzugsweise auch hier Regressionskoeffizienten des Modells bestimmt werden. Als weitere Alternative kann es sich hierbei auch um das Ablegen von gemittelten Messergebnissen in Form eines Look-Up-Table, also einer einfachen Tabellenfunktion, handeln. Dies hat den Vorteil, dass im Gegensatz zu einem Modell keine Annahmen über einen physikalischen Zusammenhang getroffen werden müssen. Zwischen den einzelnen Tabellenwerten kann dann vorzugsweise Interpoliert werden.

Es wurde erkannt, dass zwischen Messwerten für eine Leewindgeschwindigkeit und Messwerten für eine Luvwindgeschwindigkeit, die jeweils zumindest im Wesentlichen zu gleichen Zeitpunkten aufgenommen werden, eine Abhängigkeit besteht, in welche die Ausrichtung der Gondel, relativ zu dem, den Rotor anströmenden, Wind, eingeht. Die Ausrichtung der Gondel geht dabei vorzugsweise in Form einer gemessenen Leewindrichtung ein, gegebenenfalls unter Berücksichtigung eines Ausgleichswerts. Daher kann die Abhängigkeit unter Berücksichtigung der Leewindrichtung ermittelt werden.

Vorteilhaft kann der beschriebenen Abhängigkeit ein, insbesondere mathematisches, Modell zu Grunde gelegt werden, anhand dessen eine Korrekturfunktion für gemessene Leewindgeschwindigkeit ermittelbar ist. Unter Verwendung der Korrekturfunktion lässt sich dadurch von leeseitig gemessenen Windgeschwindigkeiten auf luvseitig herrschende Windgeschwindigkeiten schließen.

Vorzugsweise wird das Modell anhand von Messwerten, die eine Leewindrichtung, eine Leewindgeschwindigkeit und eine Luvwindgeschwindigkeit kennzeichnen, konfiguriert, indem die Messwerte in dem Modell in Beziehung zueinander gesetzt werden, so dass Rückschlüsse auf die Wirkung insbesondere der Gondelausrichtung bzw. der gemessenen Leewindrichtung auf die Beziehung zwischen der gemessenen Leewindgeschwindigkeit und der gemessenen Luvwindgeschwindigkeit gezogen werden können.

Dies erlaubt eine zuverlässige und präzise Ermittlung von Luvwindgeschwindigkeiten anhand von gemessenen Leewindgeschwindigkeiten und gemessenen Leewindrichtungen bei Verwendung der Korrekturfunktion. Die Luvwindgeschwindigkeiten können, ist die Korrekturfunktion erst einmal bekannt, insbesondere unabhängig von der Ausrichtung der Gondel der Windenergieanlage ermittelt werden, weil Einflüsse, welche durch die Ausrichtung verursacht werden, durch die Messung der Leewindrichtung mittels der Korrekturfunktion korrigiert werden können.

Vorzugsweise wird im Rahmen der Aufnahme einer Vielzahl an Messwerten über den bestimmten Zeitraum zu verschiedenen Zeitpunkten innerhalb des Zeitraums jeweils ein Messwert für die Luvwindgeschwindigkeit, die Leewindgeschwindigkeit und die Leewindrichtung aufgenommen. Insbesondere kann wiederholt jeweils ein Messwert für die Luvwindgeschwindigkeit, die Leewindgeschwindigkeit und die Leewindrichtung zumindest im Wesentlichen gleichzeitig aufgenommen werden. Die Zeitpunkte, zu denen jeweils drei Messwerte aufgenommen werden, können dabei zumindest teilweise regelmäßig und/oder zumindest teilweise unregelmäßig über den Zeitraum verteilt sein.

Bei den aufgenommenen Messwerten handelt es sich bevorzugt um zeitliche Mittelwerte, insbesondere gleitende Mittelwerte. Bevorzugte Mittelungszeiten sind insbesondere mindestens 10 sec, insbesondere mindestens 30 sec, insbesondere bevorzugt etwa 1 Minute.

In einer bevorzugten Ausführungsform ist das Modell ein multilineares Regressionsmodell. Vorzugsweise steht gemäß dem Modell jeder Messwert für die Luvwindgeschwindigkeit in, bevorzugt linearer, Abhängigkeit von einem Messwert für die Leewindgeschwindigkeit und einem Messwert für die Leewindrichtung. Jeder Messwert kann dabei mit jeweils einem Regressionskoeffizienten gewichtet sein. Dadurch kann die Korrekturfunktion auch mit geringem Rechenaufwand schnell und zuverlässig ermittelt werden.

In einer weiteren bevorzugten Ausführungsform wird die Korrekturfunktion auf Grundlage einer Ausgleichsrechnung, insbesondere einer Regressionsanalyse, ermittelt. Vorzugsweise werden dabei Regressionskoeffizienten der Modellfunktion durch die Methode kleinster Fehlerquadrate ermittelt. Die Korrekturfunktion, insbesondere deren Regressionskoeffizienten, kann bzw. können beispielsweise durch einen dreidimensionalen Fit der gemessenen Windgeschwindigkeiten und der zugehörigen Windrichtungen ermittelt werden. Dies ermöglicht das Ermitteln einer Korrekturfunktion, die zuverlässig die Beziehung zwischen Leewindrichtungen und Luvwindrichtungen angibt.

In einer weiteren bevorzugten Ausführungsform wird die Luvwindgeschwindigkeit mittels einer Sensorvorrichtung ermittelt. Vorzugsweise ist die Sensorvorrichtung dabei als Lidar-Einrichtung, Sodar-Einrichtung oder Referenzanemometer eingerichtet. Dadurch kann die Luvwindgeschwindigkeit zuverlässig und präzise ermittelt werden.

Dabei kann die Sensorvorrichtung insbesondere an einen Turm, der die Gondel der Windenergieanlage trägt, oder an der Gondel, insbesondere an einer Rotornabe des Rotors, der Windenergieanlage angeordnet sein. Die von der Sensorvorrichtung aufgenommenen Messwerte für die Luvwindgeschwindigkeit werden daher vorteilhaft nicht oder zumindest nur geringfügig von der Rotorbewegung beeinflusst und grenzen sich besonders deutlich von den Messwerten für die Leewindgeschwindigkeit ab. Die vorstehende Anordnung ermöglicht es darüber hinaus in besonderer Weise, die für die Windenergieanlage relevante Luvwindgeschwindigkeit in einem Bereich unmittelbar vor dem Rotor zu ermitteln. Die ermittelte Korrekturfunktion ermöglicht daher eine besonders präzise Berechnung der Luvwindgeschwindigkeit.

In einer weiteren bevorzugten Ausführungsform ist die Sensorvorrichtung luvseitig und separat von der Windenergieanlage, insbesondere an einer benachbarten Windenergieanlage, angeordnet. Eine luvseitige Anordnung der Sensorvorrichtung im Sinne der Erfindung ist insbesondere eine Anordnung relativ zur Windenergieanlage, in der die Sensorvorrichtung von Luftmassen angeströmt wird, die anschließend auch den Rotor der Windenergieanlage anströmen.

Die Sensorvorrichtung kann dabei in Bodennähe, insbesondere auf dem Boden, oder auf einem Turm, insbesondere zumindest im Wesentlichen in Höhe der Rotornabe der Windenergieanlage, angeordnet sein. Dadurch kann sichergestellt werden, dass die gemessenen Luvwindgeschwindigkeiten repräsentativ sind für die Geschwindigkeit des den Rotor der Windenergieanlage anströmenden Winds.

Ein zweiter Aspekt der Erfindung betrifft ein Verfahren zum Ermitteln einer Ausrichtungskorrekturfunktion für eine auf einem Turm angeordnete Gondel einer Windenergieanlage, wobei die Windenergieanlage mindestens ein auf einer Leeseite eines Rotors der Windenergieanlage angeordnetes Anemometer und ein auf der Leeseite des Rotors angeordnetes Anemotropometer aufweist. Das Verfahren weist die folgenden Arbeitsschritte auf: (i) Messen eines Leistungsmaßes der Windenergieanlage, einer Leewindrichtung mittels des Anemotropometers und einer Leewindgeschwindigkeit mittels des mindestens einen Anemometers, wobei jeweils eine Vielzahl von Messwerten über einen bestimmten Zeitraum aufgenommen wird; (ii) Zuordnen von Messwerten des Leistungsmaßes und der Leewindrichtung zu in mindestens ein Windgeschwindigkeitsbin eingruppierten Messwerten der Leewindgeschwindigkeit auf Grundlage von Zeitpunkten, zu denen die Messwerte aufgenommen wurden; erfindungsgemäß werden die Messwerte der Leewindgeschwindigkeit mittels einer gemäß einem Verfahren nach dem ersten Aspekt der Erfindung ermittelten Korrekturfunktion korrigiert; (iii) Ermitteln einer Modellfunktion für eine Beziehung zwischen dem Leistungsmaß und der Leewindrichtung für das mindestens eine Windgeschwindigkeitsbin; (iv) Ermitteln einer Ausrichtungskorrekturfunktion für eine Soll-Ausrichtung der Gondel relativ zur der gemessenen Leewindrichtung auf der Grundlage der Modellfunktion, wobei die Ausrichtungskorrekturfunktion ein vorbestimmtes Kriterium bezüglich der ermittelten Modellfunktion für das mindestens eine Windgeschwindigkeitsbin erfüllt; und (vi) Ausgeben der ermittelten Ausrichtungskorrekturfunktion.

Eine Ausrichtungskorrekturfunktion im Sinne der Erfindung ist insbesondere ein Korrekturwert oder Korrekturfaktor, mittels dem eine Ausrichtung der Gondel der Windenergieanlage, insbesondere bezüglich einer Leistungsoptimierung oder zumindest einer Leistungsverbesserung, ausgerichtet werden kann. Die Ausrichtungskorrekturfunktion wird vorzugsweise als Korrekturwinkel in Abhängigkeit der gemessenen Leewindrichtung ermittelt oder als Korrekturwinkelfunktion, die von einer oder mehreren Größen, beispielsweise einem Luftdruck, einer Luftfeuchtigkeit, einer Windgeschwindigkeit, einer Anordnung der Windenergieanlage in einem Windenergieanlagenpark und/oder dergleichen, abhängen kann.

Ein Leistungsmaß im Sinne der Erfindung ist insbesondere ein Maß für die von der Windenergie erzeugte oder erzeugbare Leistung. Das Leistungsmaß kann insbesondere eine Rotordrehzahl, eine Generatorleistung oder dergleichen sein.

Ein Ermitteln einer Modellfunktion im Sinne der Erfindung ist insbesondere ein Bestimmen von Koeffizienten, vorzugsweise Regressionskoeffizienten, eines der Modellfunktion zu Grunde gelegten Modells. Eine Modellfunktion kann beispielsweise mittels eines Fits von Messwerten ermittelt werden.

Anhand einer Modellfunktion im Sinne der Erfindung kann insbesondere jeder gemessenen Leewindrichtung ein Leistungsmaß, insbesondere präzise, zugeordnet werden.

Ein Windgeschwindigkeitsbin im Sinne der Erfindung ist insbesondere ein Windgeschwindigkeitsintervall. Aufgenommene Messwerte können einem Windgeschwindigkeitsbin zugeordnet werden, indem eine zum zumindest im Wesentlichen gleichen Zeitpunkt gemessene Leewindgeschwindigkeit bzw. dessen korrigierter Wert, der die Luvwindgeschwindigkeit repräsentieren soll oder ein entsprechender Mittelwert aus mehreren Leewindgeschwindigkeitsmessungen dem entsprechenden Windgeschwindigkeitsbin zugeordnet werden. Insbesondere können Tupel aus Messwerten, die zum zumindest im Wesentlichen gleichen Zeitpunkt aufgenommen wurden, einem Windgeschwindigkeitsbin auf Grundlage mindestens eines Messwerts für eine Leewindgeschwindigkeit, der im Tupel enthalten ist, zugeordnet werden.

Ein vorbestimmtes Kriterium im Sinne der Erfindung ist insbesondere eine Bedingung, welche die Modellfunktion erfüllen muss. Vorzugsweise wird derjenige Winkel oder Winkelbereich, für welchen das vorbestimmte Kriterium erfüllt ist, als Ausrichtungskorrekturfunktion ausgegeben.

Eine Beziehung zwischen dem Leistungsmaß und der mittels eines Anemotropometers ermittelten Leewindrichtung im Sinne der Erfindung kann insbesondere eine Beziehung zwischen dem Leistungsmaß und einer Ausrichtung einer Gondel sein. Insbesondere kann die gemessene Leewindrichtung eine Soll-Gondelausrichtung definieren, so dass die Ausrichtung der Gondel in Bezug auf die Soll-Gondelausrichtung aufgefasst werden kann.

Vorzugsweise ist das Anemotropometer in einer definierten Ausrichtung auf der Gondel montiert, so dass bei einer Ausrichtung der Gondel, in der eine Rotorachse parallel zur Richtung ausgerichtet ist, aus der das Anemotropometer angeströmt wird, das Anemotropometer vorzugsweise Werte von 0° für die Leewindrichtung ausgibt. Daher kann die Ausrichtung der Gondel als Abweichung der Rotorachse von der Leewindrichtung aufgefasst werden.

Bei der Definition der Soll-Gondelausrichtung kann insbesondere auch ein Ausgleichswert zusätzlich zur Leewindrichtung berücksichtigt werden. Die vorstehend genannte Beziehung kann sich also insbesondere auf das Leistungsmaß und eine Fehlausrichtung der Gondel beziehen, wobei die Fehlausrichtung der Gondel einer Abweichung von der durch die Leewindrichtung und den Ausgleichswert definierten Ausrichtung der Gondel entspricht.

Der zweite Aspekt der Erfindung beruht insbesondere auf der Erkenntnis, dass bei einer Korrektur der Ausrichtung der Gondel einer Windenergieanlage die Windgeschwindigkeit, insbesondere mit welcher der Rotor angeströmt wird, berücksichtigt werden sollte, da sich beispielsweise gezeigt hat, dass bei wechselnden Windverhältnissen jeweils unterschiedliche Winkel zwischen der Rotorachse und der Richtung, aus welcher der Rotor auf Höhe der Rotornabe angeströmten wird, vorteilhaft bezüglich der von der Windenergieanlage erzeugbaren Leistung sind. Mit anderen Worten kann beispielsweise eine Leistungsoptimierung oder zumindest Leistungsverbesserung besonders wirksam durchgeführt werden, indem für verschiedene Windgeschwindigkeitsbins eine Ausrichtungskorrekturfunktion, insbesondere jeweils ein Korrekturwinkel für jedes Windgeschwindigkeitsbin, berücksichtigt wird. Vorzugsweise wird die Modellfunktion für eine Beziehung zwischen dem Leistungsmaß und der Leewindrichtung für das mindestens eine Windgeschwindigkeitsbin auf Grundlage von, mittels einer erfindungsgemäßen Korrekturfunktion, insbesondere nach dem ersten Aspekt der Erfindung, korrigierten Messwerten der Leewindgeschwindigkeit ermittelt. Weiter vorzugsweise werden dazu die Messwerte des Leistungsmaßes und der Leewindrichtung Luvwindgeschwindigkeiten zugeordnet, die aus korrigierten Messwerten für die Leewindgeschwindigkeit, die zu gleichen Zeitpunkten wie die Messwerte für das Leistungsmaß und die Leewindrichtung aufgenommen wurden, hervorgehen und in mindestens ein Windgeschwindigkeitsbin eingruppiert werden. Dadurch kann die Ausrichtungskorrekturfunktion derart ermittelt werden, dass das vorgegebene Kriterium bezüglich der Modellfunktion von der Ausrichtungskorrekturfunktion bei verschiedenen Windgeschwindigkeiten präzise erfüllbar ist. Durch die erfindungsgemäße Korrektur, bei deren Ermittlung die gemessene Leewindrichtung berücksichtigt wird, wird somit eine verbesserte Genauigkeit bei der Ausrichtung der Windenergieanlage erreicht. Hierdurch wird insbesondere eine verbesserte Leistungsausbeute der Windenergieanlage ermöglicht. Somit kann beispielsweise die Gondel auf Grundlage der ausgegebenen Ausrichtungskorrekturfunktion auch bei unterschiedlichen Windgeschwindigkeiten immer in der Weise ausgerichtet werden, dass die von der Windenergieanlage erzeugte Leistung verbessert wird.

Vorzugsweise kann das Verfahren bei einem Prototyp für einen Windenergieanlagentyp oder einer repräsentativen Windenergieanlage für eine Menge von Windenergieanlagen angewendet werden, um die Ausrichtungskorrekturfunktion sowie die Windgeschwindigkeitskorrekturfunktion, insbesondere mehrere Korrekturwinkel bzw. Korrekturfunktionen, für eine Vielzahl an Windgeschwindigkeitsbins zu erhalten. Die Ausrichtungskorrekturfunktion kann dann für baugleiche oder ähnliche Windenergieanlagen verwendet werden.

In einer weiteren bevorzugten Ausführungsform ist das Kriterium eine Maximierung der Modellfunktion. Vorzugsweise wird die Ausrichtungskorrekturfunktion als ein Korrekturwinkel oder Korrekturwinkelbereich ermittelt, für den die ermittelte Modellfunktion einen maximalen Wert annimmt. Da die Modellfunktion in bevorzugter Weise die Zuordnung der Leewindgeschwindigkeit bzw. einer Fehlausrichtung der Gondel, die von der Leewindgeschwindigkeit und einem Ausgleichswert abhängt, zu einem Leistungsmaß der Windenergieanlage in mindestens einem Windgeschwindigkeitsbin angibt, kann dieser maximale Wert einer maximal erreichbaren Leistung der Windenergieanlage, zumindest in der vorliegenden Konfiguration, z.B. beim gewählten Anstellwinkel der Rotorblätter, in diesem Windgeschwindigkeitsbin entsprechen. Die Wahl des Kriteriums als Maximierung der Modellfunktion ermöglicht daher eine zuverlässige und, insbesondere bezüglich der Windgeschwindigkeit, flexible Leistungsoptimierung der Windenergieanlage auf Grundlage der ausgegebenen Ausrichtungskorrekturfunktion.

In einer weiteren bevorzugten Ausführungsform ist das Leistungsmaß eine Rotordrehzahl des Rotors oder eine Generatordrehzahl eines Generators der Windenergieanlage. Dadurch kann das Leistungsmaß zuverlässig und schnell bestimmt werden und gibt die erzeugte bzw. erzeugbaren Leistung der Windenergieanlage an.

In einer weiteren bevorzugten Ausführungsform wird die Modellfunktion für mehrere Windgeschwindigkeitsbins ermittelt. Vorzugsweise bildet die ausgegebene Ausrichtungskorrekturfunktion eine Betriebskennlinie für die Soll-Ausrichtung der Gondel relativ zur gemessenen Leewindrichtung. Die Ausrichtungskorrekturfunktion wird dabei in bevorzugter Weise als Korrekturwinkelfunktion ausgegeben, die von der Windgeschwindigkeit abhängt und für verschiedene Windgeschwindigkeiten jeweils einen Korrekturwinkel zur Berücksichtigung bei der Ausrichtung der Gondel angibt. Die Betriebskennlinie für die Soll-Ausrichtung der Gondel relativ zur gemessenen Leewindrichtung kann besonders leicht von einer Windenergieanlagensteuerung gespeichert und/oder ausgewertet werden und ermöglicht einen Betrieb der Windenergieanlage bei durchgängig verbesserter Leistungserzeugung.

Ein dritter Aspekt der Erfindung betrifft ein Verfahren zum Betreiben einer Windenergieanlage mit einer auf einem Turm angeordnete Gondel, einem Rotor und einem Anemometer, wobei das Anemometer leeseitig vom Rotor angeordnet ist. Das Verfahren weist die folgenden Arbeitsschritte auf: (i) Ermitteln einer Leewindgeschwindigkeit mittels des Anemometers; und (ii) Ausrichten der Gondel unter Verwendung einer Ausrichtungskorrekturfunktion, insbesondere einer Betriebskennlinie, die gemäß dem Verfahren nach dem zweiten Aspekt der Erfindung ermittelt wurde, unter Berücksichtigung der ermittelten Leewindgeschwindigkeit. Vorzugsweise wird die Ausrichtungskorrekturfunktion, insbesondere die Betriebskennlinie, nach Inbetriebnahme der Windenergieanlage, beispielsweise in einem Kalibrierungszeitraum, ermittelt, um die Windenergieanlage zu einem späteren Zeitpunkt mit der dabei ermittelten Ausrichtungskorrekturfunktion betreiben zu können. Dadurch kann die Windenergieanlage auch über einen längeren Betriebszeitraum mit verbesserter Leistungserzeugung betrieben werden.

Ein vierter Aspekt der Erfindung betrifft ein Computerprogramm, das Anweisungen umfasst, welche, wenn sie von einem Computer ausgeführt werden, diesen dazu veranlassen, die Schritte eines Verfahrens gemäß dem ersten, zweiten oder dritten Aspekt der Erfindung auszuführen.

Ein fünfter Aspekt der Erfindung betrifft ein Computer-lesbares Medium, auf dem ein Computerprogramm gemäß dem vierten Aspekt der Erfindung gespeichert ist.

Ein sechster Aspekt der Erfindung betrifft ein System zum Ermitteln einer Ausrichtungskorrekturfunktion für eine auf einem Turm angeordnete Gondel einer Windenergieanlage mit mindestens einem Anemometer, einem Anemotropometer und einer Steuerungseinrichtung. Vorzugsweise sind das mindestens eine Anemometer und das Anemotropometer auf einer Leeseite eines Rotors der Windenergieanlage angeordnet. Die Steuerungseinrichtung weist in bevorzugter Weise auf: (i) ein Mittel zum Aufnehmen einer Vielzahl an Messwerten einer mittels des Anemometers ermittelten Leewindgeschwindigkeit, einer mittels des Anemotropometers ermittelten Leewindrichtung und eines Leistungsma-ßes der Windenergieanlage über einen bestimmten Zeitraum; (ii) ein Mittel zum Zuordnen von Messwerten des Leistungsmaßes und der Leewindrichtung zu in mindestens ein Windgeschwindigkeitsbin eingruppierten Messwerten der Leewindgeschwindigkeit auf Grundlage von Zeitpunkten, zu denen die Messwerte aufgenommen wurden, wobei die Messwerte der Leewindgeschwindigkeit vorzugsweise mittels einer Korrekturfunktion, erfindungsgemäß nach dem ersten Aspekt der Erfindung, korrigiert werden; (iii) Mittel zum Ermitteln einer Modellfunktion für eine Beziehung zwischen dem Leistungsmaß und der Leewindrichtung für das mindestens eine Windgeschwindigkeitsbin; (iv) Mittel zum Ermitteln einer Ausrichtungskorrekturfunktion für eine Soll-Ausrichtung der Gondel relativ zur der gemessenen Leewindrichtung auf der Grundlage der Modellfunktion, wobei die Ausrichtungskorrekturfunktion ein vorbestimmtes Kriterium bezüglich der ermittelten Modellfunktion für das mindestens eine Windgeschwindigkeitsbin erfüllt; und (v) Schnittstelle zum Ausgeben der ermittelten Ausrichtungskorrekturfunktion.

Die Erfindung wird im Folgenden anhand von nicht einschränkenden Ausführungsbeispielen, die in den Figuren dargestellt sind, näher erläutert. Darin zeigen wenigstens teilweise schematisch:
- **Fig. 1**: ein bevorzugtes Ausführungsbeispiel eines erfindungsgemäßen Systems zum Ermitteln einer Ausrichtungskorrekturfunktion;
- **Fig. 2**: ein bevorzugtes Ausführungsbeispiel eines erfindungsgemäßen Verfahrens zum Ermitteln einer Korrekturfunktion;
- **Fig. 3**: ein Beispiel für die Auswirkung einer Korrektur von gemessenen Leewindgeschwindigkeiten;
- **Fig. 4**: ein Beispiel für Modellfunktionen, anhand derer Ausrichtungskorrekturfunktionen ermittelt werden;
- **Fig. 5**: ein bevorzugtes Ausführungsbeispiel eines erfindungsgemäßen Verfahrens zum Ermitteln einer Ausrichtungskorrekturfunktion; und
- **Fig. 6**: ein bevorzugtes Ausführungsbeispiel eines erfindungsgemäßen Verfahrens zum Betreiben einer Windenergieanlage.

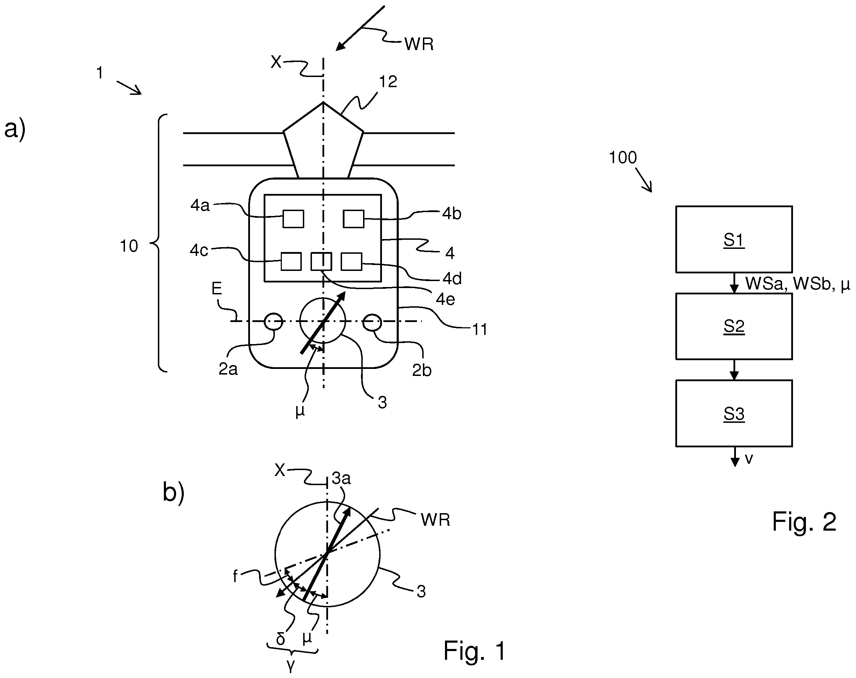

**Figur 1** zeigt im Figurenteil **a)** ein bevorzugtes Ausführungsbeispiel eines erfindungsgemäßen Systems 1 zum Ermitteln einer Ausrichtungskorrekturfunktion f für eine auf einem Turm angeordnete Gondel 11 einer Windenergieanlage 10 mit zwei Anemometern 2a, 2b, einem Anemotropometer 3 und einer Steuerungseinrichtung 4, die mit den zwei Anemometern 2a, 2b und dem Anemotropometer 3 verbunden ist.

Die beiden Anemometer 2a, 2b und das Anemotropometer 3 sind vorzugsweise auf der Gondel 11 angeordnet, wobei die Gondel einen Rotor 12 mit mindestens zwei, insbesondere drei, Rotorblättern trägt. Die Anemometer 2a, 2b und das Anemotropometer 3 können dabei insbesondere auf einer Leeseite des Rotors 12 angeordnet sein, so dass die Anemometer 2a, 2b Leewindgeschwindigkeiten messen und das Anemotropometer 3 eine Leewindrichtung p misst. Vorzugsweise sind die beiden Anemometer 2a, 2b zusammen mit dem Anemotropometer 3 in einer Ebene E angeordnet, die senkrecht auf einer Rotorachse X des Rotors 12 steht.

Das Anemotropometer 3 ist schematisch in einer vergrößerten Darstellung in **Figur 1b****)** gezeigt. Üblicherweise ist das Anemotropometer 3 in der Weise auf der Gondel 11 ausgerichtet, insbesondere montiert, dass eine definierte Ausrichtung des Anemotropometers 3, auf die sich vom Anemotropometer 3 ausgegebene Windrichtungen beziehen, zumindest im Wesentlichen parallel zur Rotorachse X verläuft. Die vom Anemotropometer 3, beispielsweise mittels einer Windfahne 3a, gemessene Windrichtung p entspricht daher in bevorzugter Weise dem Winkel zwischen der Richtung, aus der das Anemometer 3 angeströmten wird, und der Rotorachse X.

Da der den Rotor 12 luvseitig aus einer Windrichtung WR anströmende Wind durch den Rotor 12 abgelenkt wird, entspricht die mittels des Anemotropometer 3 gemessene Windrichtung p nicht der luvseitigen Windrichtung WR. Um diese Missweisung zu korrigieren, kann auf die gemessene Leewindrichtung p ein Ausgleichswert δ addiert werden, welcher beispielsweise empirisch ermittelt wird. Wird also eine Leewindrichtung p gemessen und die Gondel um einen Winkel γ = µ + δ gedreht, kann die Rotorachse X zumindest im Wesentlichen parallel zur Luvwindrichtung WR ausgerichtet werden. Der Winkel γ wird auch als Fehlausrichtung oder sog. yaw error bezeichnet.

Wie in Figur 1a) gezeigt, weist die Steuerungseinrichtung 4 vorzugsweise ein Mittel 4a zum Aufnehmen einer Vielzahl an Messwerten des ersten und/oder zweiten Anemometers 2a, 2b sowie des Anemotropometers 3 auf, die über einen bestimmten Zeitraum von den Anemometern 2a, 2b und dem Anemotropometer 3 erzeugt und bereitgestellt werden. Dabei kann das Mittel 4a dazu eingerichtet sein, die Messwerte des ersten und/oder zweiten Anemometers 2a, 2b für die Windgeschwindigkeit auf Grundlage einer Korrekturfunktion, insbesondere einer Transferfunktion, zu korrigieren, so dass sie einer Geschwindigkeit des Windes auf der Luvseite des Rotors 12 entsprechen (siehe Figur 2). Insbesondere kann das Mittel 4a dadurch Messwerte aufnehmen, die eine Luvwindgeschwindigkeit entsprechen.

Das Mittel 4a ist vorzugsweise des Weiteren dazu eingerichtet, Messwerte für ein Leistungsmaß der Windenergieanlage 10 über den bestimmten Zeitraum aufzunehmen. Die Messwerte für das Leistungsmaß können beispielsweise durch eine Messung der Rotordrehzahl des Rotors 12 oder eine Generatordrehzahl eines mit dem Rotor 12 verbundenen Generators der Windenergieanlage 10 gemessen werden.

Das Mittel 4a zum Aufnehmen einer Vielzahl an Messwerten ist vorzugsweise dazu eingerichtet, jeweils einen zuletzt erzeugten Messwert vom ersten und/oder zweiten Anemometer 2a, 2b und dem Anemotropometer 3 wenigstens im Wesentlichen synchron mit einem Messwert für ein Leistungsmaß aufzunehmen. Das Mittel 4a kann insbesondere Tupel von Messwerten aufnehmen, wobei jedes Tupel einem Messwert für das Leistungsmaß, einen Messwert für die Leewindrichtung und einen Messwert für die, gegebenenfalls korrigierte, Leewindgeschwindigkeit enthält.

Die Steuerungseinrichtung 4 weist weiter vorzugsweise ein Mittel 4b zum Zuordnen von Messwerten des Leistungsmaßes und der Leewindrichtung µ, insbesondere der Fehlausrichtung γ, zu in mindestens ein Windgeschwindigkeitsbin eingruppierten und gegebenenfalls korrigierten Messwerten der Leewindgeschwindigkeit auf Grundlage von Zeitpunkten, zu denen die Messwerte aufgenommen wurden, auf. Dabei wird ein Messwert für das Leistungsmaß und ein Messwert für die Leewindrichtung p in bevorzugter Weise demjenigen Messwert für die Leewindgeschwindigkeit zugeordnet, der zum zumindest im Wesentlichen gleichen Zeitpunkt, insbesondere einem gleichen Zeitraum, vom Mittel 4a aufgenommen wurde. Insbesondere können die Messwerte aus einem Tupel einander zugeordnet werden, wobei die Messwerte für die Leewindgeschwindigkeit aus verschiedenen Tupeln in mindestens ein Windgeschwindigkeitsbin eingeordnet werden können.

Vorzugsweise weist die Steuerungseinrichtung 4 weiterhin ein Mittel 4c zum Ermitteln einer Modellfunktion für eine Beziehung zwischen dem Leistungsmaß und der Leewindrichtung p für das mindestens eine Windgeschwindigkeitsbin. Hierfür werden insbesondere die den Messwerten einer Geschwindigkeitsbin der Leewindgeschwindigkeit zugeordneten Messwerte des Leistungsmaßes (P) und der Leewindrichtung (µ) für das mindestens eine Windgeschwindigkeitsbin (j) herangezogen. Das Mittel 4c zum Ermitteln der Modellfunktion ist vorzugsweise dazu eingerichtet, eine mathematische Beziehung für die Abhängigkeit des gemessenen Leistungsmaßes von der gemessenen Leewindrichtung p bzw. von der Fehlausrichtung γ in jeweils einem Windgeschwindigkeitsbin zu finden. Das Mittel 4c kann beispielsweise dazu eingerichtet sein, eine Ausgleichsrechnung auszuführen, in deren Rahmen der Modellfunktion insbesondere ein Polynommodell zugrunde gelegt wird. Das Mittel 4c kann etwa dazu eingerichtet sein, die Abhängigkeit des Leistungsmaßes von den gemessenen Windrichtungen p bzw. die in Abhängigkeit der Windrichtungen p ermittelte Fehlausrichtung γ mit Fit zu approximieren.

Beispielsweise kann die Beziehung zwischen dem gemessenen Leistungsmaß und der gemessenen Windrichtung p durch ein Polynom mit mehreren Regressionskoeffizienten angegeben werden. Durch eine Ausgleichsrechnung, insbesondere eine Regressionsanalyse, können diese Regressionskoeffizienten bestimmt werden.

Die Steuerungseinrichtung 4 weist vorzugsweise weiterhin ein Mittel 4d zum Ermitteln wenigstens einer Ausrichtungskorrekturfunktion f für eine Soll-Ausrichtung der Gondel relativ zur gemessenen Leewindrichtung p bzw. zur auf der gemessenen Leewindrichtung p basierenden Fehlausrichtung γ auf der Grundlage der ermittelten Modellfunktion auf, wobei die Ausrichtungskorrekturfunktion f ein vorbestimmtes Kriterium bezüglich der ermittelten Modellfunktion für das mindestens eine Windgeschwindigkeitsbin erfüllt. Das Mittel 4d ist dabei vorzugsweise dazu eingerichtet, einen Wert für die Leewindrichtung p oder die Fehlausrichtung γ zu bestimmen, bei dem die Modellfunktion ein Maximum annimmt, d.h. für den das Leistungsmaß maximal ist.

Die Steuerungseinrichtung 4 weist vorzugsweise weiterhin eine Schnittstelle 4e auf, die dazu eingerichtet ist, die ermittelte Ausrichtungskorrekturfunktion f auszugeben. Die Ausrichtungskorrekturfunktion f, die insbesondere ein Korrekturwinkel oder eine Korrekturwinkelfunktion sein kann, kann verwendet werden, um die Ausrichtung der Gondel 11 bzw. der Rotorachse X relativ zur Luvwindrichtung WR derart einzustellen, dass die Leistung der Windenergieanlage 10 verbessert wird.

**Figur 2** zeigt ein bevorzugtes Ausführungsbeispiel eines Verfahrens 100 zum Ermitteln einer Korrekturfunktion v für eine Windenergieanlage, die vorzugsweise ein Anemometer zum Messen einer Windgeschwindigkeit und ein Anemotropometer zum Messen einer Windrichtung aufweist, wobei das Anemometer und das Anemotropometer in bevorzugter Weise leeseitig eines Rotors der Windenergieanlage, beispielsweise auf einer Gondel der Windenergieanlage, angeordnet sind. Die vom Anemotropometer gemessene Windrichtung kann daher insbesondere eine Leewindrichtung, und die vom Anemometer gemessenen Windgeschwindigkeit daher eine Leewindgeschwindigkeit sein.

In einem Verfahrensschritt S1 wird eine Luvwindgeschwindigkeit WSa gemessen, wobei mit Luvwindgeschwindigkeit WSa vorzugsweise die repräsentative Geschwindigkeit bezeichnet wird, mit welcher der Rotor der Windenergieanlage vom Wind angeströmt wird. Zudem wird die Leewindrichtung p und die Leewindgeschwindigkeit WSb gemessen, wobei jeweils eine Vielzahl an Messwerten in einem bestimmten Zeitraum aufgenommen wird.

Die Luvwindgeschwindigkeit WSa kann beispielsweise mittels einer Sensorvorrichtung, insbesondere mittels einer Lidar-Einrichtung, einer Sodar-Einrichtung oder einem Referenzanemometer, gemessen werden, wobei die Sensorvorrichtung vorzugsweise derart luvseitig von der Windenergieanlage angeordnet ist, das die Sensorvorrichtung anströmender Wind nach Passieren der Sensorvorrichtung auch den Rotor der Windenergieanlage anströmt. Die Leewindrichtung p und die Leewindgeschwindigkeit WSb werden von dem Anemometer bzw. dem Anemotropometer leeseitig gemessen.

Da der Rotor der Windenergieanlage den durch eine Fläche, die von Rotorblättern des Rotors überstrichen wird, tretenden Wind sowohl in der Ausbreitungsrichtung als auch in der Geschwindigkeit beeinflusst, entspricht die gemessene Leewindrichtung p nicht der Richtung, aus welcher der Wind den Rotor anströmt, und die gemessene Leewindgeschwindigkeit WSb entspricht auch nicht der gemessenen Luvwindgeschwindigkeit WSa. Beispielsweise können vom Rotor erzeugte Turbulenzen, die vom Rotor entnommene Energie sowie der Drall sowohl zu einer Richtungsänderung des Windes auf der Leeseite des Rotors als auch zu einer Abnahme der Windgeschwindigkeit führen.

In einem weiteren Verfahrensschritt S2 wird eine Korrekturfunktion v auf Grundlage der aufgenommenen Messwerte mittels eines Modells ermittelt, wobei die aufgenommenen Messwerte in dem Modell in Beziehung zueinander gesetzt werden. Die Korrekturfunktion v gibt dabei vorzugsweise die Beziehung zwischen der Luvwindgeschwindigkeit WSa und der Leewindgeschwindigkeit WSb in Abhängigkeit der Leewindrichtung p an, d.h. mittels der Korrekturfunktion v kann einer gemessenen Leewindgeschwindigkeit WSb in Abhängigkeit der Leewindrichtung p eine entsprechende Luvwindgeschwindigkeit WSa zugeordnet werden. Insbesondere erlaubt die Korrekturfunktion v eine Korrektur gemessener Leewindgeschwindigkeiten WSb bezüglich der durch den Rotor verursachten Turbulenzen.

Der Korrekturfunktion v wird vorzugsweise ein multilineares Regressionsmodell mit Regressionskoeffizienten β zu Grunde gelegt, wobei die Regressionskoeffizienten β in bevorzugter Weise im Rahmen der Ermittlung der Korrekturfunktion v bestimmt werden. Beispielsweise kann die Zuordnung der Messwerte für die Luvwindgeschwindigkeit WSa, für die Leewindgeschwindigkeit WSb und für die Leewindrichtung p zueinander mittels eines dreidimensionalen Fits approximiert werden.

Vorzugsweise werden die Messwerte in einem Gleichungssystem zur Bestimmung der Regressionskoeffizienten β in Beziehung zueinander gesetzt. Die Messwerte für die Luvwindgeschwindigkeit WSa, die Messwerte für die Leewindgeschwindigkeit WSb und die Messwerte für die Leewindrichtung p können beispielsweise jeweils zu einem Vektor WSa = [WSa₁, ..., WSaₙ], WSb = [WSb₁, ..., WSbₙ] und µ = [µ₁, ..., µₙ] zusammengefasst werden, wobei der Index i = 1, ..., n den i-ten Messwert kennzeichnet und n die Anzahl der Messwerte ist. Die vektoriell zusammengefassten Messwerte können im Rahmen einer Matrixgleichung β = (Y'·Y)⁻¹·Y'·WSa dazu genutzt werden, um die Regressionskoeffizienten β = [β₁, ..., βₘ] zu bestimmen. Dabei ist Y = [1, WSb, µ] eine Matrix, welche die vektoriell zusammengefassten Messwerte für die Leewindgeschwindigkeit WSb und die Leewindrichtung p enthält. Y' ist dabei die Transponierte der Matrix Y und Y⁻¹ das Inverse der Matrix Y.

Anstelle der gemessenen Leewindrichtung p kann auch eine Fehlausrichtung eingesetzt werden, die den Einfluss des Rotors auf die gemessene Leewindrichtung p in Form eines, insbesondere konstanten, Ausgleichswerts berücksichtigt.

In einem weiteren Verfahrensschritt S3 wird die Korrekturfunktion v ausgegeben.

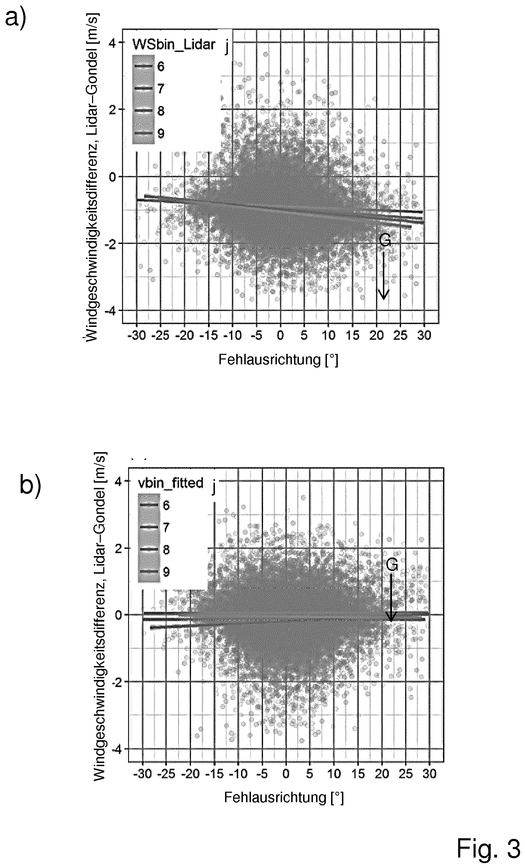

**Figur 3** zeigt ein Beispiel für die Auswirkung einer Korrektur von gemessenen Leewindgeschwindigkeiten mittels des im Zusammenhang mit Figur 2 beschriebenen Verfahrens zum Ermitteln einer Korrekturfunktion für eine Windenergieanlage. Für die in Figuren 3a) und b) gezeigten Graphen wurden Luvwindgeschwindigkeiten mittels einer Lidar-Einrichtung in Bodennähe luvseitig unmittelbar vor der Windenergieanlage gemessen. Die Leewindgeschwindigkeiten wurden mittels einem auf der Gondel angeordneten Anemometer gemessen.

**Figur 3a****)** zeigt die Beziehung zwischen gemessenen Leewindgeschwindigkeiten und gemessenen Luvwindgeschwindigkeiten in Abhängigkeit von einer Fehlausrichtung einer Gondel der Windenergieanlage, wobei die gemessenen Leewindgeschwindigkeiten nicht mit der Korrekturfunktion korrigiert wurden. Die Fehlausrichtung basiert vorzugsweise auf einer gemessenen Leewindrichtung, auf die ein Ausgleichswert aufaddiert wurde, um beispielsweise den Einfluss von durch einen Rotor der Windenergieanlage erzeugten Turbulenzen auf die gemessene Leewindrichtung auszugleichen. Da der Ausgleichswert in bevorzugter Weise konstant ist, kann die Bezugnahme auf die Fehlausrichtung im Folgenden auch als Bezugnahme auf die Leewindgeschwindigkeit aufgefasst werden.

Die gemessenen Windgeschwindigkeiten wurden in Windgeschwindigkeitsbins i = 6, 7, 8, 9 eingruppiert und die Differenz zwischen der gemessenen Luvwindgeschwindigkeit und der gemessenen Leewindgeschwindigkeit jeweils gegen die Fehlausrichtung aufgetragen. Alternativ könnten die Differenzen auch direkt gegen die Leewindrichtung aufgetragen werden, auf deren Grundlage die Fehlausrichtung ermittelt wird. Für jede der Windgeschwindigkeitsbins i wurde die Abhängigkeit der Differenz von die Fehlausrichtung durch einen linearen Fit bestimmt. Die dabei ermittelten Ausgleichsgeraden G sind in Figur 3a) dargestellt.

Dabei wird deutlich, dass Figur 3a) einen Abfall der gemessenen Leewindgeschwindigkeit für positive Ausrichtungsfehler zeigt.

**Figur 3b****)** zeigt die Beziehung zwischen korrigierten Leewindgeschwindigkeiten und gemessenen Luvwindgeschwindigkeit in Abhängigkeit von der Fehlausrichtung der Gondel, wobei die korrigierten Leewindgeschwindigkeiten auf gemessenen Leewindgeschwindigkeit basieren, die mittels der Korrekturfunktion korrigiert wurden.

Auch hier wurden die gemessenen Windgeschwindigkeiten in Windgeschwindigkeitsbins j = 6, 7, 8, 9 eingruppiert und die Differenz der gemessenen Luvwindgeschwindigkeit und der korrigierten Leewindgeschwindigkeit jeweils gegen die Fehlausrichtung aufgetragen. Ebenfalls wurde für jede der Windgeschwindigkeitsbins j die Abhängigkeit der Differenz von der Fehlausrichtung durch einen linearen Fit bestimmt. Die dabei ermittelte Ausgleichsgeraden G sind in Figur 3b) dargestellt.

Dabei wird deutlich, dass die Differenz zwischen der gemessenen Windgeschwindigkeit und der korrigierten Leewindgeschwindigkeit nicht oder zumindest nur geringfügig von der Fehlausrichtung abhängt. Unabhängig davon, wie der Rotor vom Wind angeströmt wird, kann aus der gemessenen Leewindgeschwindigkeit mittels der Korrekturfunktion eine entsprechende Luvwindgeschwindigkeit abgeleitet werden, die, zumindest im Wesentlichen, einer unabhängig gemessenen Luvwindgeschwindigkeit entspricht.

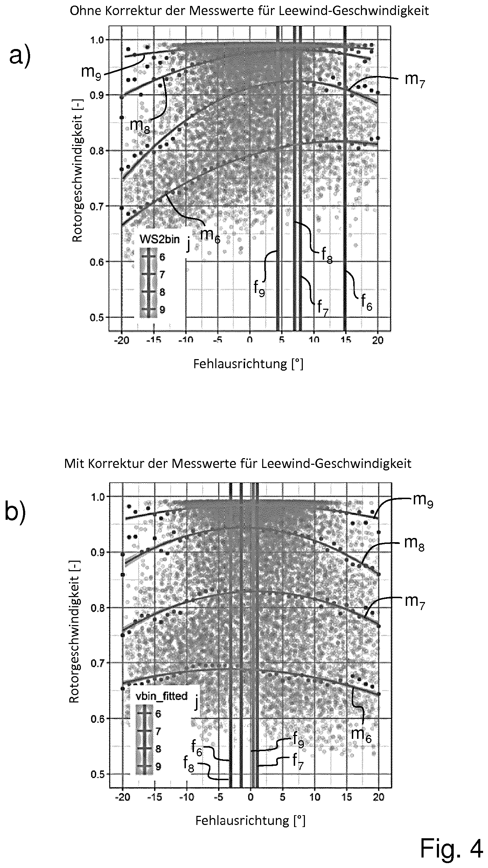

**Figur 4** zeigt ein Beispiel für Modellfunktionen mᵢ, anhand derer Ausrichtungskorrekturfunktionen fᵢ für jeweils eine Windgeschwindigkeitsbin j = 6, 7, 8, 9 ermittelt werden können. Die Modellfunktionen mᵢ geben dabei vorzugsweise die Beziehung zwischen einem Leistungsmaß, beispielsweise der Rotorgeschwindigkeit eines Rotors einer Windenergieanlage, und einer Fehlausrichtung einer Gondel der Windenergieanlage an.

Es hat sich gezeigt, dass die Verwendung der Rotorgeschwindigkeit, das heißt die Drehzahl des Rotors, im Allgemeinen sogar ein besseres Leistungsmaß darstellt als die Verwendung z.B. der Generatorleistung. Dies liegt darin begründet, dass die Auftragung der Rotordrehzahl über der Fehlausrichtung zu stärker gekrümmten Kurven führt als die Verwendung der Leistung, wodurch die Ermittlung des Maximums und somit des optimalen Betriebspunktes erleichtert wird.

Die Fehlausrichtung basiert dabei vorzugsweise auf einer gemessenen Leewindgeschwindigkeit, auf die ein Ausgleichswert, beispielsweise zum Ausgleichen von Turbulenzen auf die Messung, aufaddiert wird. Da der Ausgleichswert in bevorzugter Weise konstant ist, kann die Bezugnahme auf die Fehlausrichtung im Folgenden auch als Bezugnahme auf die Leewindgeschwindigkeit aufgefasst werden.

Die Modellfunktionen mᵢ werden vorzugsweise ermittelt, indem der Beziehung zwischen dem Leistungsmaß und der Fehlausrichtung ein Modell, insbesondere ein Polynommodell, zu Grunde gelegt wird, und das Modell durch Ermitteln von Regressionskoeffizienten des Modells angepasst wird. Die Regressionskoeffizienten können beispielsweise durch einen Fit der Messwerte für das Leistungsmaß und die Fehlausrichtung mit einem Polynom ermittelt werden.

Dabei werden die Messwerte für das Leistungsmaß und die Fehlausrichtung vorzugsweise in Windgeschwindigkeitsbins j eingruppiert in Abhängigkeit von einer gemessenen Leewindgeschwindigkeit, für die einzelne Messwerte in bevorzugter Weise jeweils zum zumindest im Wesentlichen gleichen Zeitpunkt aufgenommen wurden wie einzelne Messwerte für das Leistungsmaß und die Fehlausrichtung. Damit können die Modellfunktionen mᵢ in Abhängigkeit der Windgeschwindigkeiten ermittelt werden, welche durch die Windgeschwindigkeitsbins j gekennzeichnet sind.

Die Ausrichtungskorrekturfunktionen fᵢ werden auf Grundlage der Modellfunktionen mᵢ in der Weise ermittelt, dass die Ausrichtungskorrekturfunktionen fᵢ ein vorbestimmtes Kriterium bezüglich der Modellfunktionen mᵢ erfüllen. Wie in Figur 4 gezeigt, können die Ausrichtungskorrekturfunktion fᵢ jeweils denjenigen Wert für den Ausrichtungsfehler angeben, bei dem die zugehörige Modellfunktion mᵢ maximal wird. Vorzugsweise geben die Ausrichtungskorrekturfunktion fᵢ also denjenigen Winkel an, um den die Gondel der Windenergieanlage gegenüber einer Fehlausrichtung von 0° gedreht werden muss, um für die gegebene Konfiguration der Windenergieanlage, beispielsweise mit einem bestimmten Anstellwinkel von Rotorblättern, die maximal mögliche Leistung zu erzeugen.

**Figur 4a****)** zeigt die Modellfunktionen mᵢ und Ausrichtungskorrekturfunktionen fᵢ, die auf Grundlage von einer Eingruppierung von Messwerten für die Leewindgeschwindigkeit ermittelt wurden, ohne dass die Messwerte für die Leewindgeschwindigkeit korrigiert wurden.

**Figur 4b****)** zeigt die Modellfunktionen mᵢ und Ausrichtungskorrekturfunktionen fᵢ, die auf Grundlage von einer Eingruppierung von Messwerten für die Leewindgeschwindigkeit ermittelt wurden, wobei die Messwerte für die Leewindgeschwindigkeit mittels einer Korrekturfunktion, die vorzugsweise gemäß einem im Zusammenhang mit Figur 2 beschriebenen Verfahren ermittelt wurde, korrigiert wurden. Wie sich zeigt, ergeben sich für die Ausrichtungskorrekturfunktion fᵢ dabei kleinere Korrekturwinkel als im in Figur 4a) gezeigten Fall mit unkorrigierten Messwerten. Mit anderen Worten wird eine Windenergieanlage, deren Ausrichtung in Abhängigkeit einer gemessenen Leewindrichtung korrigiert wird, um eine verbesserte Leistungsabgabe zu erzielen, in der Regel übersteuert, d.h. zu große Korrekturen an der Ausrichtung vorgenommen. Dies kann sich negativ auf die erzeugte Leistung auswirken. Demgegenüber stellt eine Korrektur der gemessenen Leewindgeschwindigkeit eine Möglichkeit dar, eine verbesserte Leistungsabgabe zu erzielen.

Insbesondere im Fall der Modellfunktion m₆, also bei dem Windbin, welches einer Windgeschwindigkeit von 6m/s entspricht, ist der Fig. 4a) zu entnehmen, dass eine Verwendung der Leewindgeschwindigkeit ohne Korrekturfunktion eine Fehlausrichtung von 15° ergibt, wohingegen in Fig. 4b) unter Verwendung der Leewindgeschwindigkeit mittels Korrekturfunktion eine Fehlausrichtung von etwa -3° ermittelt wird. Dies bedeutet, dass ohne eine erfindungsgemäße Korrektur der Leewindgeschwindigkeit eine Luvwindgeschwindigkeit ermittelt wird, die zu fehlerhaften Ergebnissen führt. Durch die erfindungsgemäße Korrektur, bei deren Ermittlung die gemessene Leewindrichtung berücksichtigt wird, wird dagegen eine verbesserte Genauigkeit bei der Ausrichtung der Windenergieanlage erreicht. Hierdurch wird insbesondere eine verbesserte Leistungsausbeute der Windenergieanlage ermöglicht.

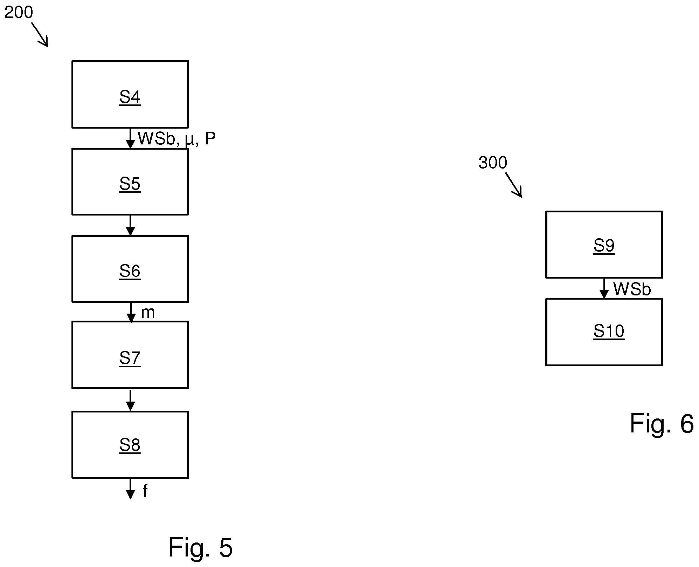

**Figur 5** zeigt ein bevorzugtes Ausführungsbeispiel eines erfindungsgemäßen Verfahrens 200 zum Ermitteln einer Ausrichtungskorrekturfunktion f für eine auf einem Turm angeordnete Gondel einer Windenergieanlage.

In einem Verfahrensschritt S4 wird ein Leistungsmaß P der Windenergieanlage, eine Leewindrichtung p und eine Leewindgeschwindigkeit WSb gemessen. Wie im Zusammenhang mit Figur 1 ausgeführt, wird dabei vorzugsweise eine Vielzahl an Messwerten für die Leewindrichtung p von mindestens einem Anemometer und eine Vielzahl an Messwerten für die Leewindgeschwindigkeit WSb von einem Anemotropometer über einen bestimmten Zeitraum erzeugt und aufgenommen, wobei das Anemotropometer und das mindestens eine Anemometer in bevorzugter Weise leeseitig von einem Rotor der Windenergieanlage angeordnet sind. Im selben Zeitraum wird auch eine Vielzahl an Messwerten für ein Leistungsmaß P der Windenergieanlage aufgenommen.

Auf Grundlage der Zeitpunkte, zu denen die Messwerte aufgenommen wurden, werden die Messwerte für das Leistungsmaß P und die Messwerte für die Leewindrichtung p den Messwerten für die Leewindgeschwindigkeit WSb in einem weiteren Verfahrensschritt S5 zugeordnet. Die Messwerte für die Leewindgeschwindigkeiten WSb werden wiederum in mindestens ein Windgeschwindigkeitsbin eingruppiert, so dass in einem weiteren Verfahrensschritt S6 für die mindestens eine Windgeschwindigkeitsbin eine Modellfunktion m für eine Beziehung zwischen dem Leistungsmaß P und der Leewindrichtung p auf Grundlage derjenigen Messwerte für das Leistungsmaß P und der Leewindrichtung p ermittelt werden kann, die den in die mindestens eine Windgeschwindigkeitsbin eingruppierten Messwerten für die Leewindgeschwindigkeit WSb zugeordnet sind.

Im Verfahrensschritt S6 wird der Modellfunktion m vorzugsweise ein Polynommodell mit mehreren Regressionskoeffizienten zu Grunde gelegt, dass bevorzugt mittels einer Ausgleichsrechnung, insbesondere einer Regressionsanalyse, an den gemessenen Zusammenhang zwischen Leistungsmaß P und Leewindrichtung p angepasst werden kann. Die dabei ermittelten Regressionskoeffizienten erlauben eine präzise Zuordnung jedem gemessenen Leistungsmaß P zu einer Leewindrichtung µ.

Anhand der Modellfunktion m kann in einem weiteren Verfahrensschritt S7 eine Ausrichtungskorrekturfunktion f ermittelt werden, wobei vorzugsweise berücksichtigt wird, dass die Ausrichtungskorrekturfunktion f ein vorbestimmtes Kriterium in Bezug auf die Modellfunktion m, beispielsweise die Maximierung der Modellfunktion m, erfüllen soll. Dabei dient die derart ermittelten Ausrichtungskorrekturfunktion f vorzugsweise einer Soll-Ausrichtung der Gondel relativ zur der gemessenen Leewindrichtung µ, beispielsweise um die von der Windenergieanlage erzeugte Leistung zu erhöhen.

Die ermittelte Ausrichtungskorrekturfunktion f wird in einem weiteren Verfahrensschritt S8 ausgegeben.

Gegebenenfalls kann im vorstehend beschriebenen Verfahren 200 anstelle der Leewindrichtung p auch eine Fehlausrichtung der Gondel, welcher sich aus der Leewindrichtung und einem, insbesondere konstanten, Ausgleichswert ergibt, verwendet werden.

**Figur 6** zeigt ein bevorzugtes Ausführungsbeispiel für ein erfindungsgemäßes Verfahren 300 zum Betreiben einer Windenergieanlage mit einer auf einem Turm angeordneten Gondel, einem Rotor und einem Anemometer, wobei das Anemometer leeseitig vom Rotor angeordnet ist.

In einem Verfahrensschritt S9 wird eine Leewindgeschwindigkeit WSb mittels des Anemometers ermittelt. Diese Leewindgeschwindigkeit WSb kann in einem weiteren Verfahrensschritt S10 dazu verwendet werden, um die Gondel durch Anwenden einer Ausrichtungskorrekturfunktion, die vorzugsweise gemäß einem im Zusammenhang mit Figur 5 ausgeführten Verfahren ermittelt wird, auszurichten.

Beispielsweise kann anhand der gemessenen Leewindgeschwindigkeit WSb mittels einer Betriebskennlinie, die durch die Ausrichtungskorrekturfunktion gegeben ist, ein Korrekturwinkel ermittelt werden, mittels dem die Gondel gegenüber einer Ausrichtung, in der eine Fehlausrichtung der Gondel zumindest im Wesentlichen null ist, weiter ausgelenkt werden kann, um eine Verbesserung der erzeugten Leistung durch die Windenergieanlage zu erzielen.

### Bezugszeichenliste

- 1: System zum Ermitteln einer Ausrichtungskorrekturfunktion
- 2a, 2b: Anemometer
- 3: Anemotropometer
- 3a: Windfahne
- 4: Steuerungseinrichtung
- 4a: Mittel zum Aufnehmen
- 4b: Mittel zum Zuordnen
- 4c: Mittel zum Ermitteln einer Modellfunktion
- 4d: Mittel zum Ermitteln einer Ausrichtungskorrekturfunktion
- 4e: Schnittstelle

- 10: Windenergieanlage
- 11: Gondel
- 12: Rotor

- 100: Verfahren zum Ermitteln einer Korrekturfunktion
- 200: Verfahren zum Ermitteln einer Ausrichtungskorrekturfunktion
- 300: Verfahren zum Betreiben einer Windenergieanlage

- X: Rotorachse
- E: Ebene

- WSa: Luvwindgeschwindigkeit
- WSb: Leewindgeschwindigkeit
- WR: Luvwindrichtung
- P: Leistungsmaß
- p: Leewindrichtung
- j: Windgeschwindigkeitsbin

- δ: Ausgleichswert
- γ: Fehlausrichtung
- m: Modellfunktion
- f: Ausrichtungskorrekturfunktion
- v: Korrekturfunktion

- G: Ausgleichsgeraden

- S1 - S10: Verfahrensschritte

## Patentansprüche

1. Verfahren (100) zum Ermitteln einer Korrekturfunktion (v) für eine Windenergieanlage (10), mittels der eine Luvwindgeschwindigkeit (WSa) auf der Grundlage einer von einem leeseitigen Anemometer (2a, 2b) der Windenergieanlage (10) gemessenen Leewindgeschwindigkeit (WSb) ermittelbar ist, wobei Luv und Lee sich auf einen Rotor (12) der Windenergieanlage (10) beziehen, folgende Arbeitsschritte aufweisend:
Messen (S1) einer Luvwindgeschwindigkeit (WSa), einer Leewindgeschwindigkeit (WSb) und einer Leewindrichtung (µ), wobei jeweils eine Vielzahl an Messwerten in einem bestimmten Zeitraum aufgenommen wird; und
Ermitteln (S2) der Korrekturfunktion (v) auf Grundlage der aufgenommenen Messwerte mittels eines Modells, wobei die aufgenommenen Messwerte in dem Modell in Beziehung zueinander gesetzt werden und die Korrekturfunktion (v) einer Leewindgeschwindigkeit (WSb) in Abhängigkeit einer Leewindrichtung (µ) eine Luvwindgeschwindigkeit (WSa) zuordnet; und
Ausgeben der ermittelten Korrekturfunktion (v).

2. Verfahren (100) nach Anspruch 1, wobei das Modell ein multilineares Regressionsmodell ist.

3. Verfahren (100) nach Anspruch 1 oder 2, wobei die Korrekturfunktion (v) auf Grundlage einer Ausgleichsrechnung, insbesondere einer Regressionsanalyse, ermittelt wird.

4. Verfahren (100) nach einem der vorangehenden Ansprüche, wobei die Luvwindgeschwindigkeit (WSa) mittels einer Sensorvorrichtung ermittelt wird, die als Lidar-Einrichtung, Sodar-Einrichtung oder Referenzanemometer eingerichtet ist.

5. Verfahren (100) nach Anspruch 4, wobei die Sensorvorrichtung luvseitig und separat von der Windenergieanlage (10), insbesondere an einer benachbarten Windenergieanlage, angeordnet ist.

6. Verfahren (200) zum Ermitteln einer Ausrichtungskorrekturfunktion (f) für eine auf einem Turm angeordnete Gondel (11) einer Windenergieanlage (10), wobei die Windenergieanlage (10) mindestens ein auf einer Leeseite eines Rotors (12) der Windenergieanlage (10) angeordnetes Anemometer (2a, 2b) und ein auf der Leeseite des Rotors (12) angeordnetes Anemotropometer (3) aufweist, die folgenden Arbeitsschritte aufweisend:
Messen (S4) eines Leistungsmaßes (P) der Windenergieanlage (10), einer Leewindrichtung (µ) mittels des Anemotropometers (3) und einer Leewindgeschwindigkeit (WSb) mittels des mindestens einen Anemometers (2a, 2b), wobei jeweils eine Vielzahl von Messwerten über einen bestimmten Zeitraum aufgenommen wird;
Zuordnen (S5) von Messwerten des Leistungsmaßes (P) und der Leewindrichtung (µ) zu in mindestens ein Windgeschwindigkeitsbin (j) eingruppierten Messwerten der Leewindgeschwindigkeit (WSb) auf Grundlage von Zeitpunkten, zu denen die Messwerte aufgenommen wurden, wobei die Messwerte der Leewindgeschwindigkeit (WSb) mittels einer gemäß einem Verfahren (100) nach einem der Ansprüche 1 bis 5 ermittelten Korrekturfunktion (v) korrigiert werden;
Ermitteln (S6) einer Modellfunktion (m) für eine Beziehung zwischen dem Leistungsmaß (P) und der Leewindrichtung (µ) für das mindestens eine Windgeschwindigkeitsbin (j);
Ermitteln (S7) einer Ausrichtungskorrekturfunktion (f) für eine Soll-Ausrichtung der Gondel (11) relativ zu der gemessenen Leewindrichtung (µ) auf der Grundlage der Modellfunktion (m), wobei die Ausrichtungskorrekturfunktion (f) ein vorbestimmtes Kriterium bezüglich der ermittelten Modellfunktion (m) für das mindestens eine Windgeschwindigkeitsbin (j) erfüllt; und
Ausgeben (S8) der ermittelten Ausrichtungskorrekturfunktion (f).

7. Verfahren (200) nach Anspruch 6, wobei das Kriterium eine Maximierung der Modellfunktion (m) ist.

8. Verfahren (200) nach einem der Ansprüche 6 oder 7, wobei das Leistungsmaß (P) eine Rotordrehzahl des Rotors (12) oder eine Generatordrehzahl eines Generators der Windenergieanlage (10) ist.

9. Verfahren (200) nach einem der Ansprüche 6 bis 8, wobei die Modellfunktion (m) für mehrere Windgeschwindigkeitsbins (j) ermittelt wird und die ausgegebene Ausrichtungskorrekturfunktion (f) eine Betriebskennlinie für die Soll-Ausrichtung der Gondel (11) relativ zur gemessenen Leewindrichtung (µ) bildet.

10. Verfahren (300) zum Betreiben einer Windenergieanlage (10) mit einer auf einem Turm angeordnete Gondel (11), einem Rotor (12) und einem Anemometer (2a, 2b), wobei das Anemometer (2a, 2b) leeseitig vom Rotor (12) angeordnet ist, die folgenden Arbeitsschritte aufweisend:
Ermitteln (S9) einer Leewindgeschwindigkeit (WSb) mittels des Anemometers (2a, 2b); und
Ausrichten (S10) der Gondel (11) unter Verwendung einer gemäß dem Verfahren (200) nach einem der Ansprüche 6 bis 9 ermittelten Ausrichtungskorrekturfunktion (f), insbesondere einer Betriebskennlinie, unter Berücksichtigung der ermittelten Leewindgeschwindigkeit (WSb).

11. System (1) zum Ermitteln einer Ausrichtungskorrekturfunktion (f) für eine auf einem Turm angeordnete Gondel (11) einer Windenergieanlage (10) , wobei das System mindestens ein Anemometer (2a, 2b), ein Anemotropometer (3) und eine Steuerungseinrichtung (4) aufweist, wobei das mindestens eine Anemometer (2a, 2b) und das Anemotropometer (3) auf einer Leeseite eines Rotors (12) der Windenergieanlage (8) angeordnet sind und die Steuerungseinrichtung (4) aufweist:
Mittel (4a) zum Aufnehmen einer Vielzahl an Messwerten einer mittels des Anemometers (2a, 2b) ermittelten Leewindgeschwindigkeit (WSb), einer mittels des Anemotropometers (3) ermittelten Leewindrichtung (µ) und eines Leistungsmaßes (P) der Windenergieanlage (10) über einen bestimmten Zeitraum;
Mittel (4b) zum Zuordnen von Messwerten des Leistungsmaßes (P) und der Leewindrichtung (µ) zu in mindestens ein Windgeschwindigkeitsbin (j) eingruppierten Messwerten der Leewindgeschwindigkeit (WSb) auf Grundlage von Zeitpunkten, zu denen die Messwerte aufgenommen wurden, wobei die Messwerte der Leewindgeschwindigkeit (WSb) mittels einer Korrekturfunktion (v) korrigiert werden;
Mittel (4c) zum Ermitteln einer Modellfunktion (m) für eine Beziehung zwischen dem Leistungsmaß (P) und der Leewindrichtung (µ) für das mindestens eine Windgeschwindigkeitsbin (j);
Mittel (4d) zum Ermitteln einer Ausrichtungskorrekturfunktion (f) für eine Soll-Ausrichtung der Gondel (11) relativ zur der gemessenen Leewindrichtung (µ) auf der Grundlage der Modellfunktion (m), wobei die Ausrichtungskorrekturfunktion (f) ein vorbestimmtes Kriterium bezüglich der ermittelten Modellfunktion (m) für das mindestens eine Windgeschwindigkeitsbin (j) erfüllt; und
Schnittstelle (4e) zum Ausgeben der ermittelten Ausrichtungskorrekturfunktion (f), wobei die Messwerte der Leewindgeschwindigkeit (WSb) mittels einer gemäß einem Verfahren (100) nach einem der Ansprüche 1 bis 5 ermittelten Korrekturfunktion (v) korrigiert werden.

12. Computerprogramm, das Anweisungen umfasst, welche, wenn sie von einem Computer ausgeführt werden, das System, insbesondere die Steuerungseinrichtung des Systems, gemäß Anspruch 11 dazu veranlasst, die Schritte eines Verfahrens (100, 200, 300) gemäß einem der vorangehenden Ansprüche auszuführen.

13. Computer-lesbares Medium, auf dem ein Computerprogramm nach Anspruch 12 gespeichert ist.

## Claims

1. A method (100) of determining a correction function (v) for a wind energy installation (10), by means of which a windward side wind speed (WSa) can be determined on the basis of a leeward side wind speed (WSb) measured by a leeward side anemometer (2a, 2b) of the wind energy installation (10), wherein windward side and leeward side relate to a rotor (12) of the wind energy installation (10), wherein the method comprises the following steps of operation:
measuring (S1) a windward side wind speed (WSa), a leeward side wind speed (WSb) and a leeward side wind direction (µ), wherein a plurality of measurement values are respectively recorded in a defined period of time; and
determining (S2) the correction function (v) on the basis of the recorded measurement values by means of a model, wherein the recorded measurement values are set in relation to one another in the model, and the correction function (v) assigns a windward side wind speed (WSa) to a leeward side wind speed (WSb) as a function of a leeward side wind direction (µ); and
outputting the determined correction function (v).

2. The method (100) according to claim 1, wherein the model is a multilinear regression model.

3. The method (100) according to claim 1 or 2, wherein the correction function (v) is determined on the basis of a compensation calculation, in particular on the basis of a regression analysis.

4. The method (100) according to any one of the preceding claims, wherein the windward side wind speed (WSa) is determined by means of a sensor device, which is set up as a Lidar device, a Sodar device or a reference anemometer.

5. The method (100) according to claim 4, wherein the sensor device is arranged on the windward side and separately from the wind energy installation (10), in particular on a neighbouring wind energy installation.

6. A method (200) of determining an alignment correction function (f) for a nacelle (11) of a wind energy installation (10) that is arranged on a tower, wherein the wind energy installation (10) has at least one anemometer (2a, 2b) arranged on a leeward side of a rotor (12) of the wind energy installation (10), and an anemotropometer (3) arranged on the leeward side of the rotor (12), wherein the method comprises the following steps of operation:
measuring (S4) a power measure (P) of the wind energy installation (10), a leeward side wind direction (µ) by means of the anemotropometer (3) and a leeward side wind speed (WSb) by means of the at least one anemometer (2a, 2b), wherein a plurality of measurement values are respectively recorded over a defined period of time;
assigning (S5) measurement values of the power measure (P) and of the leeward side wind direction (µ) to measurement values of the leeward side wind speed (WSb) that are grouped into at least one wind speed bin (j), on the basis of instants at which the measurement values were recorded, wherein the measurement values of the leeward side wind speed (WSb) are corrected by means of a correction function (v) determined in accordance with a method (100) according to any one of claims 1 to 5;
determining (S6) a model function (m) for a relationship between the power measure (P) and the leeward side wind direction (µ) for the at least one wind speed bin (j);
determining (S7) an alignment correction function (f) for a target alignment of the nacelle (11) relative to the measured leeward side wind direction (µ), on the basis of the model function (m), wherein the alignment correction function (f) satisfies a predetermined criterion with respect to the determined model function (m) for the at least one wind speed bin (j); and
outputting (S8) the alignment correction function (f) that has been determined.

7. The method (200) according to claim 6, wherein the criterion is a maximisation of the model function (m).

8. The method (200) according to any one of claims 6 or 7, wherein the power measure (P) is a rotor rotational speed of the rotor (12) or a generator rotational speed of a generator of the wind energy installation (10).

9. The method (200) according to any one of claims 6 to 8, wherein the model function (m) is determined for a plurality of wind speed bins (j), and the output alignment correction function (f) forms an operating characteristic curve for the target alignment of the nacelle (11) relative to the measured leeward side wind direction (µ).

10. A method (300) of operating a wind energy installation (10) that has a nacelle (11) which is arranged on a tower, a rotor (12) and an anemometer (2a, 2b), wherein the anemometer (2a, 2b) is arranged on the leeward side of the rotor (12), wherein the method comprises the following steps of operation:
determining (S9) a leeward side wind speed (WSb) by means of the anemometer (2a, 2b); and
aligning (S10) the nacelle (11) with the aid of an alignment correction function (f), in particular an operating characteristic curve, which has been determined in accordance with the method (200) according to any one of claims 6 to 9, with the determined leeward side wind speed (WSb) being taken into account.

11. A system (1) for determining an alignment correction function (f) for a nacelle (11) of a wind energy installation (10) that is arranged on a tower, wherein the system has at least one anemometer (2a, 2b), an anemotropometer (3) and a control device (4), wherein the at least one anemometer (2a, 2b) and the anemotropometer (3) are arranged on a leeward side of a rotor (12) of the wind energy installation (8), and wherein the control device (4) comprises:
means (4a) for recording a plurality of measurement values of a leeward side wind speed (WSb), determined by means of the anemometer (2a, 2b), of a leeward side wind direction (µ) determined by means of the anemotropometer (3), and a power measure (P) of the wind energy installation (10), over a defined period of time;
means (4b) for assigning measurement values of the power measure (P) and of the leeward side wind direction (µ) to measurement values of the leeward side wind speed (WSb) that are grouped into at least one wind speed bin (j), on the basis of instants at which the measurement values were recorded, wherein the measurement values of the leeward side wind speed (WSb) are corrected by means of a correction function (v);
means (4c) for determining a model function (m) for a relationship between the power measure (P) and the leeward side wind direction (µ) for the at least one wind speed bin (j);
means (4d) for determining an alignment correction function (f) for a target alignment of the nacelle (11) relative to the measured leeward side wind direction (µ), on the basis of the model function (m), wherein the alignment correction function (f) satisfies a predetermined criterion with respect to the determined model function (m) for the at least one wind speed bin (j); and
an interface (4e) for outputting the determined alignment correction function (f), wherein the measurement values of the leeward side wind speed (WSb) are corrected by means of a correction function (v) which has been determined in accordance with a method (100) according to any one of claims 1 to 5.

12. A computer program which comprises instructions which, when they are being executed on a computer, cause the system according to claim 11, in particular the control means of the system according to claim 11, to carry out the steps of a method (100, 200, 300) in accordance with any one of the preceding claims.

13. A computer-readable medium on which a computer program according to claim 12 is stored.

## Revendications

1. Procédé (100) de détermination d'une fonction de correction (v) pour une éolienne (10), au moyen de laquelle une vitesse au vent (WSa) peut être déterminée sur la base d'une vitesse sous le vent (WSb) mesurée par un anémomètre (2a, 2b) sous le vent de l'éolienne (10), dans lequel « au vent » et « sous le vent » se rapportent à un rotor (12) de l'éolienne (10), présentant les étapes de travail suivantes :
la mesure (S1) d'une vitesse au vent (WSa), d'une vitesse sous le vent (WSb) et d'un sens sous le vent (µ), dans lequel respectivement une pluralité de valeurs de mesure est enregistrée dans une période déterminée ; et
la détermination (S2) de la fonction de correction (v) sur la base des valeurs de mesure enregistrées au moyen d'un modèle, dans lequel les valeurs de mesure enregistrées dans le modèle sont mises en rapport les unes avec les autres et la fonction de correction (v) associe une vitesse au vent (WSa) à une vitesse sous le vent (WSb) en fonction d'un sens sous le vent (µ) ; et
l'émission de la fonction de correction (v) déterminée.

2. Procédé (100) selon la revendication 1, dans lequel le modèle est un modèle de régression multilinéaire.

3. Procédé (100) selon la revendication 1 ou 2, dans lequel la fonction de correction (v) est déterminée sur la base d'un calcul de compensation, en particulier d'une analyse de régression.

4. Procédé (100) selon l'une des revendications précédentes, dans lequel la vitesse au vent (WSa) est déterminée au moyen d'un dispositif capteur qui est conçu comme dispositif Lidar, dispositif Sodar ou anémomètre de référence.

5. Procédé (100) selon la revendication 4, dans lequel le dispositif capteur est agencé au vent et séparément de l'éolienne (10), en particulier au niveau d'une éolienne contiguë.

6. Procédé (200) de détermination d'une fonction de correction d'alignement (f) pour une nacelle (11) agencée sur une tour d'une éolienne (10), dans lequel l'éolienne (10) présente au moins un anémomètre (2a, 2b) agencé sur un côté sous le vent d'un rotor (12) de l'éolienne (10) et un anémotropomètre (3) agencé sur le côté sous le vent du rotor (12), présentant les étapes de travail suivantes :
la mesure (S4) d'un degré de puissance (P) de l'éolienne (10), d'un sens sous le vent (µ) au moyen de l'anémotropomètre (3) et d'une vitesse sous le vent (WSb) au moyen d'au moins un anémomètre (2a, 2b), dans lequel respectivement une pluralité de valeurs de mesure est enregistrée pendant une période déterminée ;
l'association (S5) de valeurs de mesure du degré de puissance (P) et du sens sous le vent (µ) à des valeurs de mesure groupées dans au moins une case de vitesse de vent (j) de la vitesse sous le vent (WSb) sur la base de moments, auxquels les valeurs de mesure ont été enregistrées, dans lequel les valeurs de mesure de la vitesse sous le vent (WSb) sont corrigées au moyen d'une fonction de correction (v) déterminée selon un procédé (100) selon l'une des revendications 1 à 5 ;
la détermination (S6) d'une fonction de modèle (m) pour un rapport entre le degré de puissance (P) et le sens sous le vent (µ) pour l'au moins une case de vitesse du vent (j) ;
la détermination (S7) d'une fonction de correction d'alignement (f) pour un alignement de consigne de la nacelle (11) par rapport au sens sous le vent (µ) mesuré sur la base de la fonction de modèle (m), dans lequel la fonction de correction d'alignement (f) remplit un critère prédéterminé par rapport à la fonction de modèle déterminée (m) pour l'au moins une case de vitesse du vent (j) ; et
l'émission (S8) de la fonction de correction d'alignement (f) déterminée.

7. Procédé (200) selon la revendication 6, dans lequel le critère est une maximisation de la fonction de modèle (m).

8. Procédé (200) selon l'une des revendications 6 ou 7, dans lequel le degré de puissance (P) est une vitesse de rotation du rotor (12) ou une vitesse de rotation d'un générateur de l'éolienne (10).

9. Procédé (200) selon l'une des revendications 6 à 8, dans lequel la fonction de modèle (m) est déterminée pour plusieurs cases de vitesse du vent (j) et la fonction de correction d'alignement (f) émise forme une courbe caractéristique de fonctionnement pour l'alignement de consigne de la nacelle (11) par rapport au sens sous le vent (µ) mesuré.

10. Procédé (300) de fonctionnement d'une éolienne (10) avec une nacelle (11) agencée sur une tour, un rotor (12) et un anémomètre (2a, 2b), dans lequel l'anémomètre (2a, 2b) est agencé sous le vent du rotor (12), présentant les étapes de travail suivantes :
la détermination (S9) d'une vitesse sous le vent (WSb) au moyen de l'anémomètre (2a, 2b) ; et
l'alignement (S10) de la nacelle (11) en utilisant une fonction de correction d'alignement (f) déterminée selon le procédé (200) selon l'une des revendications 6 à 9, en particulier une courbe caractéristique de fonctionnement, en tenant compte de la vitesse du vent sous le vent (WSb) déterminée.

11. Système (1) de détermination d'une fonction de correction d'alignement (f) pour une nacelle (11) agencée sur une tour d'une éolienne (10), dans lequel le système présente au moins un anémomètre (2a, 2b), un anémotropomètre (3) et un dispositif de commande (4), dans lequel l'au moins un anémomètre (2a, 2b) et l'anémotropomètre (3) sont agencés sur un côté sous le vent d'un rotor (12) de l'éolienne (8) et le dispositif de commande (4) présente :
des moyens (4a) pour la réception d'une pluralité de valeurs de mesure d'une vitesse sous le vent (WSb) déterminée au moyen de l'anémomètre (2a, 2b), d'un sens sous le vent (µ) déterminé au moyen de l'anémotropomètre (3) et d'un degré de puissance (P) de l'éolienne (10) pendant une période déterminée ;
des moyens (4b) pour l'association de valeurs de mesure du degré de puissance (P) et du sens sous le vent (µ) à des valeurs de mesure groupées dans au moins une case de vitesse de vent (j) de la vitesse sous le vent (WSb) sur la base de moments, auxquels les valeurs de mesure ont été enregistrées, dans lequel les valeurs de mesure de la vitesse sous le vent (WSb) sont corrigées au moyen d'une fonction de correction (v) ;
des moyens (4c) pour la détermination d'une fonction de modèle (m) pour un rapport entre le degré de puissance (P) et le sens sous le vent (µ) pour l'au moins une case de vitesse du vent (j) ;
des moyens (4d) pour la détermination d'une fonction de correction d'alignement (f) pour un alignement de consigne de la nacelle (11) par rapport au sens sous le vent (µ) mesuré sur la base de la fonction de modèle (m),
dans lequel la fonction de correction d'alignement (f) remplit un critère prédéterminé par rapport à la fonction de modèle déterminée (m) pour l'au moins une case de vitesse du vent (j) ; et
une interface (4e) pour l'émission de la fonction de correction d'alignement (f) déterminée, dans lequel les valeurs de mesure de la vitesse sous le vent (WSb) sont corrigées au moyen d'une fonction de correction (v) déterminée selon un procédé (100) selon l'une des revendications 1 à 5.

12. Programme informatique qui comprend des instructions qui, lorsqu'elles sont réalisées par un ordinateur, incitent le système, en particulier le dispositif de commande du système, selon la revendication 11 à réaliser les étapes d'un procédé (100, 200, 300) selon l'une des revendications précédentes.

13. Support lisible par ordinateur, sur lequel un programme informatique selon la revendication 12 est enregistré.
